# EUROPEAN PATENT SPECIFICATION

(11) **EP 2 977 175 B1**
(45) Date of publication and mention of the grant of the patent: **06.03.2019**
(21) Application number: 13878744.5
(22) Date of filing: 30.04.2013
(51) Int. Cl.: B29C 49/56, B29L 22/00

(54) **BOTTLE BLOWING MACHINE HAVING BOTTOM DIE LIFTING CLAMPING MECHANISM**
FLASCHENBLASMASCHINE MIT UNTERGESENKANHEBEKLEMMVORRICHTUNG
MACHINE DE SOUFFLAGE DE BOUTEILLES PRÉSENTANT UN MÉCANISME DE LEVAGE ET DE SERRAGE DE LA MATRICE DE FOND

(30) Priority: 19.03.2013 CN 201310088199
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); ZHU, Xingan, Zhangjiagang Jiangsu 215624 (CN); CAI, Tongjing, Zhangjiagang Jiangsu 215624 (CN); HE, Deping, Zhangjiagang Jiangsu 215624 (CN)
(74) Representative: Baker, Thomas Edward
(86) International application number: PCT/CN2013/075032
(87) International publication number: WO 2014/146337

(56) References cited:
- EP-A1- 2 559 545
- CN-A- 101 262 997
- CN-A- 102 380 949
- CN-A- 102 962 989
- CN-U- 203 157 116
- CN-Y- 201 198 192
- DE-U1-202008 016 838
- US-A1- 2007 292 550
- US-A1- 2010 203 185

## Description

### Field of the Invention

The present invention relates to the field of processing equipment of a beverage bottle, and more particularly to a bottle blowing machine with bottom mould elevating and locking mechanisms.

### Description of the Related Art

Generally a bottle blowing machine is provided with a mould opening and closing mechanism, a bottom mould elevating mechanism and a bottom mould positioning mechanism. A conventional bottom mould elevating mechanism comprises an elevating bracket and a bottom mould cam. The elevating bracket is provided with a guide rail, a guide rod and a roll wheel. The elevating bracket is mounted into a sliding groove of the machine frame by the guide rail. A spring is sheathed on the guide rod, a wheel shaft protruding towards a side is provided at the bottom of the elevating bracket, and the roll wheel is mounted on the wheel shaft. The bottom mould cam is located above the roll wheel and contacts the roll wheel. The guide rod is mounted on a support plate laterally extending on the top of the elevating bracket and. The spring is located between the support plate and the machine frame. The bottom mould elevating mechanism presses the elevating bracket by means of the bottom mould cam such that the bottom mould descends, and the elevating bracket is uplifted under the effect of the spring such that the bottom mould rises.

A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame.

A conventional bottom mould positioning mechanism, for example, a bottom mould locking mechanism of a linear bottle blowing machine as disclosed in patent publication No. CN201755911U, comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

US2010/0203185 describes a device for blow molding containers. The temperature of parisons, which are made of a thermo-plastic material, is adjusted and the parisons are then molded in a blow mold under the effect of a pressurized medium to give containers. The blow mold which is composed of at least two blow mold segments is held in place by mold supports of a blow molding station (3) that is arranged on a supporting structure (41). A bottom part (7) is used in addition to the blow mold segments. Both the mold supports and the bottom part are arranged in such a way that they can be mechanically positioned. The mold supports and the bottom part are mechanically coupled to each other. One of the mold supports (19) is immobile and the other mold support is swiveled to the supporting structure. The bottom part has a trajectory relative to the mold support which has a component that extends in the longitudinal direction of the blow molding station and a component that extends at a right angle to the longitudinal direction.

US2007/0292550 describes a device for blow molding containers. Initially, pre-forms, which are made of thermoplastic material, are tempered and, subsequently, transformed into containers inside a blow form using the effects of a pressurized medium. Said blow form which is made up of at least two blow molding segments is held in place by mold supports of a blowing station. A bottom part is used in addition to the blow molding segments. Both the mold supports (19, 20) and the bottom part (7) are arranged in such a way that they can be mechanically positioned. The mold supports and the bottom part are permanently coupled to each other via a common mechanical drive unit (43).

Thus, in the prior art, the mould opening and closing mechanism, bottom mould elevating mechanism and bottom mould positioning mechanism are complicated in configuration and bulky, and each mechanism is self-driven, thereby leading to the inconvenience of operation and high cost.

### Summary of the Invention

An object of the invention is to provide an improved bottle blowing machine.

For the foregoing purpose, the following technical solution is utilized in the invention: A bottle blowing machine, comprising
a machine frame;
a mould opening and closing assembly having a mould opening state and a mould closing state, which comprises a fixed mould plate fixedly disposed on the machine frame, a bottom mould slidable in a vertical direction relative to the fixed mould plate, and a moving mould plate rotatably connected with the fixed mould plate by a rotation shaft, when the mould opening and closing assembly is in the mould closing state, the fixed mould plate, the moving mould plate and the bottom mould together enclose to provide a cavity;
an elevating assembly comprising a protrusion fixedly disposed on the rotation shaft, an elevating rod fixedly connected with the bottom mould, and a sliding block fixed on the elevating rod, a guiding groove is opened on the protrusion and the sliding block is slidably inserted into the guiding groove, in the course of rotation of the rotation shaft, the contact position of the guiding groove with the sliding block rises or descends, and the sliding block moves in the up-down direction under the guiding of the guiding groove;
a bottom mould locking assembly for locking the bottom mould with the machine frame, comprising a plurality of locking parts slidably disposed on the machine frame in a horizontal direction, multiple swing members swingably connected with the machine frame around a first axis for driving the sliding of the plurality of locking parts, and a rotation member fixedly connected with the rotation shaft and rotatable relative to the machine frame around a second axis, for controlling the swinging of the swing members relative to the machine frame, when the mould opening and closing assembly is in the mould closing state, the plurality of locking parts respectively contact against the bottom mould such that the bottom mould is separated from the machine frame; and
a power source for driving the rotation of the rotation shaft.

Preferably, the rotation shaft sequentially extends through the moving mould plate, the rotation member and the protrusion from up to down.

Preferably, the mould opening and closing assembly also comprises a locking mechanism for locking the moving mould plate with the fixed mould plate in the mould closing state, the locking mechanism comprises a connecting shaft slidably disposed on the fixed mould plate, a connecting rod fixedly connected with the connecting shaft and a locking pin fixedly connected with the connecting rod, at least one first connecting protrusion is provided on the moving mould plate, and a pin hole is opened on the connecting protrusion, a second connecting protrusion staggered with the first connection protrusion in up-down direction is provided on the fixed mould plate, and a hole is opened on the second connecting protrusion for the connecting rod and the locking pin sliding therein, when in the mould opening state, the locking pin is positioned in the hole, and when in the mould closing state the locking pin slides relative to the second connecting protrusion and extends through the hole to insert into the pin hole.

The rotation member has a plurality of guiding surfaces thereon and a plurality of projections are formed on the multiple swinging members, the plurality of projections slidably and correspondingly contacts with the plurality of guiding surfaces, and the distance between the contact position of each projection with the corresponding guiding surface and the second axis changes with the rotation of the rotation member. Preferably, an elastic member is arranged between each swing member and the machine frame for providing a restoring force for the swing member, a convex column is formed on a corresponding locking part and a U-shaped portion is provided on the swing member at a distance from the first axis, and the convex column is slidably inserted into the U-shaped portion.

Preferably, the machine frame comprises a support frame, an upper frame located above the support frame and an upright frame fixedly connected between the support frame and the upper frame, the mould opening and closing assembly and bottom mould locking assembly are located above the support frame, and the protrusion is located below the support frame.

Preferably, a first through-hole for the elevating rod extending through therein and a second through-hole for the rotation shaft extending through therein respectively are opened on the support frame, the elevating rod is slidable in the first through-hole in the up-down direction, and the rotation shaft is rotatable in the second through-hole.

More preferably, an upper end of the rotation shaft is rotatably connected with the upper frame.

Preferably, the first axis and second axis are parallel to each other, the rotation member, the swing members and the locking parts are located above an upper surface of the support frame.

Preferably, a swing arm is connected on a lower end of the rotation shaft, and the power source drives the rotation of the rotation shaft by the swing arm.

More preferably, the bottle blowing machine comprises two locking parts respectively at two opposite sides of the bottom mould and two swing members respectively corresponding to the two swing members, the bottom mould locking assembly also comprises two guiding rails disposed on the machine frame, the two locking parts respectively are slidable along the two guiding rails (22).

Preferably, the swing arm is fixedly connected with the lower end of the rotation shaft.

More preferably, the axis of rotation of the rotation shaft is parallel to the direction of movement of the elevating rod relative to the machine frame, and the guiding groove inclinedly extends relative to a plane perpendicular to the axis of rotation.

Preferably, the protrusion has an arc-shaped side on which the guiding groove is opened, and the central axis of the circumference where the arc-shaped side is and the axis of rotation of the rotation shaft coincide.

More preferably, the moving mould plate is substantially provided along a vertical direction and the extending direction of height of the moving mould plate is parallel to the shaft axis of the rotation shaft.

Due to the above technical solution, the present invention has the following advantages as compared with the prior art: in the bottle blowing machine of invention, the mould opening and closing assembly, the elevating assembly and the bottom mould positioning assembly are driven by one rotation shaft to achieve linkage, the action is achieved by simple structure, thus, the bottle blowing machine is simple in structure, convenient in operation and has small volume.

### Brief Description of the Drawings

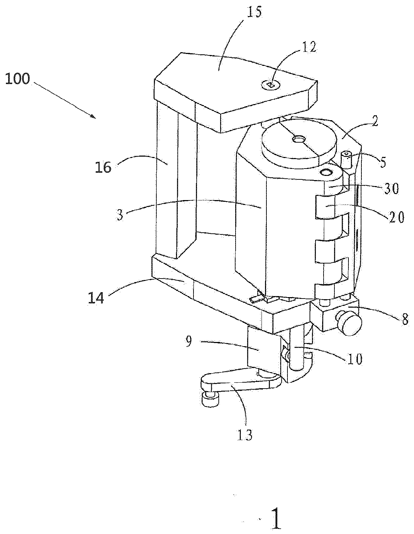

Fig.1 is a first schematic drawing of a bottle blowing machine in mould closing state according to the invention.

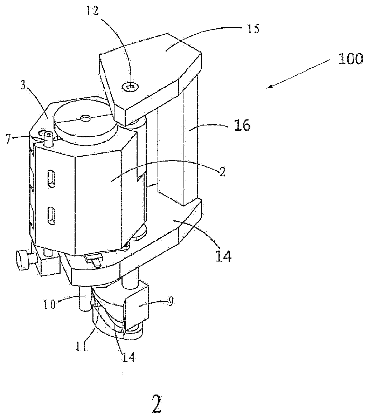

Fig.2 is second schematic drawing of the bottle blowing machine in mould closing state according to the invention.

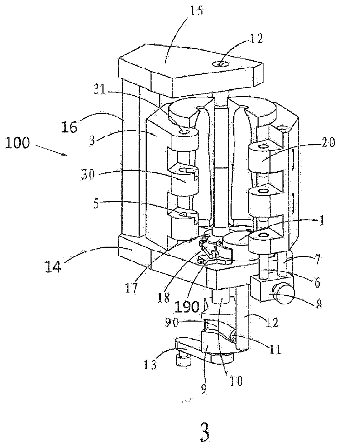

Fig.3 is a schematic drawing of the bottle blowing machine in mould opening state according to the invention.

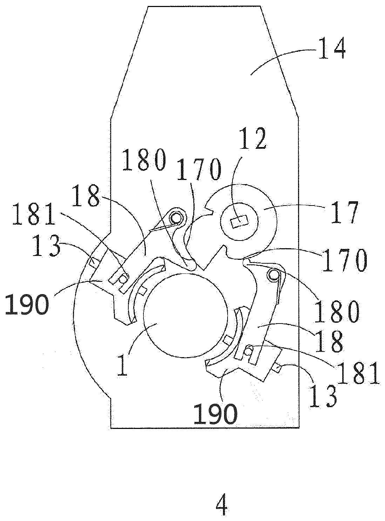

Fig.4 is a top view of the bottle blowing machine in mould opening state according to the invention.
Fig.5 is a top view of the bottle blowing machine in mould closing state according to the invention.

Wherein: 1. a bottom mould; 2. a fixed mould plate; 20. a second connecting protrusion; 3. a moving mould plate; 30. a first connecting protrusion; 31. a pin hole; 4. a mould; 5. a connecting shaft; 6. a pin shaft; 7. a connecting rod; 8. a driving block; 9. a protrusion; 90. a guiding groove; 10. an elevating rod; 11. a sliding block; 12. a rotation shaft; 13. a swing arm; 14. a support frame; 15. an upper frame; 16. an upright frame; 17. a rotation member; 170. a guiding surface; 18. a swing member; 180. a protrusion; 181. a U-shaped portion; 190. locking parts; 22. a guide rail.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

As shown in fig.s 1-4, a bottle blowing machine comprises a machine frame 100, a mould opening and closing assembly having a mould opening state and a mould closing state, an elevating assembly, a bottom locking assembly and a driving assembly for driving the above assemblies.

The assemblies will be illustrated hereinafter in more detail.

The machine frame 100 comprises a support frame 14, an upper frame 15 located above the support frame 14 and an upright frame 16 fixedly connected between the support frame 14 and the upper frame 15. The mould opening and closing assembly and bottom locking assembly are located above the support frame 14, and the protrusion 9 is located below the support frame 14.

The mould opening and closing assembly which has a mould opening state and a mould closing state comprises a fixed mould plate 2 fixedly disposed on the machine frame 100, a bottom mould 1 slidable relative to the fixed mould plate 2 in a vertical direction, and a moving mould plate 3 rotatably connected with the fixed mould plate 2 by a rotation shaft 12. When the mould opening and closing assembly is in the mould closing state, the fixed mould plate 2, the moving mould plate 3 and the bottom mould 1 together enclose to provide a cavity. The mould opening and closing assembly also comprises a locking mechanism for locking the moving mould plate 3 with the fixed mould plate 2. At least one first connecting protrusion 30 is disposed on the moving mould plate 3, and a pin hole 31 is opened on the first connecting protrusion 30. A second connecting protrusion 20 staggered with the first connection protrusion 30 is disposed on the fixed mould plate 2. The locking mechanism comprises a connecting shaft 5 slidably disposed on the fixed mould plate 2, a connecting rod 7 fixedly connected with the connecting shaft 5 and a pin shaft 6 fixedly connected with the connecting rod 7. A hole is opened on the second connecting protrusion 20 for the connecting rod 7 and pin shaft 6 sliding therein. When the mould opening and closing assembly is in the mould opening state, the pin shaft 6 is positioned in the hole. When the mould opening and closing assembly is in the mould closing state, the pin shaft 6 slides relative to the second connecting protrusion 20 and extends through the hole to insert into the pin hole 31.

The bottom mould locking assembly comprises: a plurality of locking parts 190 slidably disposed on the machine frame 100 along a horizontal direction; multiple swing members 18 for driving the sliding of the plurality of locking parts 190, and each of the multiple swing member s 18 is swingably connected on the machine frame 100 around a first axis; and a rotation member 17 for controlling the swinging of the swing members 18 relative to the machine frame 100, the rotation member 17 is fixedly connected with the rotation shaft 12 and is rotatable relative to the machine frame 100 around a second axis. when the mould opening and closing assembly is in the mould closing state, the plurality of locking parts 190 respectively contact against the bottom mould 1 such that the bottom mould 1 is separated from the machine frame 100. The rotation shaft 12 sequentially extends through the moving mould plate 3, the rotation member 17 and the protrusion 9 from up to down.

The elevating assembly comprises a protrusion 9 fixed disposed on the rotation shaft 12, an elevating rod 10 fixedly connected with the bottom mould 1, and a sliding block 11 fixed on the elevating rod 10. A guiding groove 90 is opened on the protrusion 9, and the sliding block 11 is slidably inserted into the guiding groove 90. In the course of rotation of the rotation shaft 12, the contact position of the guiding groove 90 with the sliding block 11 rises or descends, and the sliding block 11 moves in the up-down direction under the guiding of the guiding groove 90.

A power source is used for driving the rotation of the rotation shaft 12.

The mould opening and closing assembly comprises a fixed mould plate 2 fixedly disposed on the machine frame, a bottom mould 1 slidable in a vertical direction relative to the fixed mould plate 2, and a moving mould plate 3 rotatably connected with the fixed mould plate 2 by a rotation shaft 12. When the mould opening and closing assembly is in the mould closing state, the fixed mould plate 2, the moving mould plate 3 and the bottom mould 1 together enclose to provide a cavity. The mould opening and closing assembly and bottom mould locking assembly are located above the support frame 14, and the protrusion 9 is located below the support frame 14.

The mould opening and closing assembly comprises a bottom mould 1, a fixed mould plate 2 disposed on the machine frame and a moving mould plate 3 cooperating with the fixed mould plate 2. The mould opening and closing assembly has a mould opening state and a mould closing state. When in the mould closing state, the bottom mould 1, the fixed mould plate 2 and the moving mould plate 3 enclose to form a cavity. A mould 4 is detachably mounted on the fixed mould plate 2 and the moving mould plate 3.

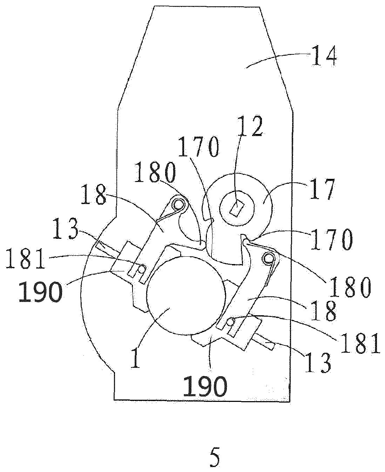

The mould opening and closing assembly also comprises a locking mechanism for locking the moving mould plate 3 with the fixed mould plate 2 when in the mould closing state, as shown in fig. 5. Specifically, a plurality of first connecting protrusions 30 are disposed on the moving mould plate 3, and a notch is formed between two adjacent first connection protrusions 30. A first pin hole 31 is opened on each first connection protrusion 30, and the pin hole 31 extends through the first connection protrusion 30 in up- down direction. The second connecting protrusions 20 are disposed on the fixed mould plate 2, the second connection projections 20 are staggered with the first connection protrusions 30 when the mould opening and closing assembly is in the mould closing state. A second pin hole 21 is opened on each second connection protrusion 20.

The rotation member 17 has a plurality of guiding surface 170 thereon and a plurality of projections 180 are formed on the multiple swinging members 18, the plurality of projections 180 slidably and correspondingly contact with the plurality of guiding surfaces 170. The distance between the contact position of each projection 180 with the corresponding guiding surface 170 and the second axis changes with the rotation of the rotation member 7.

An elastic member is arranged between each swing member 18 and the machine frame 100 for providing a restoring force for the swing member 18, a convex column is formed on a locking part 190 corresponding to the swing member and a U-shaped portion 181 is formed on the swing member 18 at a distance from the first axis. The convex column is slidably inserted into the U-shaped portion 181.

In this embodiment, the bottle blowing machine comprises two locking parts 190 respectively at two opposite sides of the bottom mould 1 and two swing members 180 respectively corresponding to the two swing members 18. The bottom mould locking assembly also comprises two guide rails 22 disposed on the machine frame 100, the two locking parts 190 respectively slide along the two guide rails 22. However, in the invention the number of the locking parts 190 and the swing members 180 is not limited hereby.

A first through-hole for the elevating rod 10 extending through therein and a second through-hole for the rotation shaft 12 extending through therein are opened on the support frame 14. The elevating rod 10 is slidable in the first through-hole in the up-down direction, and the rotation shaft 12 is rotatable in the second through-hole. The upper end of the rotation shaft 12 is rotatably connected with the upper frame 15. The first axis and second axis are parallel to each other, the rotation member 17, the swing members 18 and the locking parts 190 are located above an upper surface of the support frame 14.

A swing arm 13 is connected on a lower end of the rotation shaft 12 for driving the rotation shaft 12, and the power source drives the rotation of the rotation shaft 12 by the swing arm 13. The swing arm 13 is fixedly connected with the lower end of the rotation shaft 12.

The axis of rotation of the rotation shaft 12 is parallel to the direction of movement of the elevating rod 10 relative to the machine frame, and the guiding groove 90 inclinedly extends relative to a plane perpendicular to the axis of rotation.

The protrusion 9 has an arc-shaped side, the central axis of the circumference where the arc-shaped side is and the axis of rotation of the rotation shaft 12 coincide, and the guiding groove 90 is opened on the arc-shaped side.

The moving mould plate 3 is substantially provided along a vertical direction and the extending direction of height of the moving mould plate 3 is parallel to the shaft axis of the rotation shaft 12.

The above embodiment is described for illustrating the technical concept and features of the invention, the aim is intended to enable a person skilled in the art to appreciate the content of the invention and further implement it, and the protecting scope of the invention can not be limited hereby.

## Claims

1. A bottle blowing machine, comprising
a machine frame (100);
a mould opening and closing assembly having a mould opening state and a mould closing state, which comprises a fixed mould plate fixedly disposed on the machine frame (100), a bottom mould (1) slidable in a vertical direction relative to the fixed mould plate, and a moving mould plate (3) rotatably connected with the fixed mould plate (2) by a rotation shaft (12), when the mould opening and closing assembly is in the mould closing state, the fixed mould plate (2), the moving mould plate (3) and the bottom mould (1) together enclose to provide a cavity;
an elevating assembly, **characterised in that** the elevating assembly comprises a protrusion (9) fixedly disposed on the rotation shaft (12), an elevating rod (10) fixedly connected with the bottom mould (1), and a sliding block (11) fixed on the elevating rod (10), a guiding groove (90) being opened on the protrusion (9), and the sliding block (11) being slidably inserted into the guiding groove (90), in the course of rotation of the rotation shaft (12), the contact position of the guiding groove (90) with the sliding block (11) rises or descends, and the sliding block (11) moves in the up-down direction under the guiding of the guiding groove (90);
a bottom mould locking assembly for locking the bottom mould (1) with the machine frame (100), comprising a plurality of locking parts (190) slidably disposed on the machine frame (100) in a horizontal direction, multiple swing members (18) swingably connected with the machine frame (100) around a first axis for driving the sliding of the plurality of locking parts (190), and a rotation member (17) fixedly connected with the rotation shaft (12) and rotatable relative to the machine frame (100) around a second axis, for controlling the swinging of the swing members (18) relative to the machine frame (100), when the mould opening and closing assembly is in the mould closing state, the plurality of locking parts (190) respectively contact against the bottom mould (1) such that the bottom mould (1) is separated from the machine frame (100); and
a power source for driving the rotation of the rotation shaft (12).

2. The bottle blowing machine as claimed in claim 1, wherein the rotation shaft (12) sequentially extends through the moving mould plate (3), the rotation member (17) and the protrusion (9) from up to down.

3. The bottle blowing machine as claimed in claim 1, wherein the mould opening and closing assembly also comprises a locking mechanism for locking the moving mould plate (3) with the fixed mould plate (2) in the mould closing state, the locking mechanism comprising a connecting shaft (5) slidably disposed on the fixed mould plate (2), a connecting rod (7) fixedly connected with the connecting shaft (5) and a locking pin (6) fixedly connected with the connecting rod (7), at least one first connecting protrusion (30) being provided on the moving mould plate (3), and a pin hole (31) being opened on the connecting protrusion (30), a second connecting protrusion (20) staggered with the first connection protrusion (30) in up-down direction being provided on the fixed mould plate (2), and a hole (22) being opened on the second connecting protrusion (20) for the connecting rod (7) and the locking pin (6) sliding therein, when in the mould opening state, the locking pin (6) is positioned in the hole (22), and when in the mould closing state the locking pin (6) slides relative to the second connecting protrusion (20) and extends through the hole (22) to insert into the pin hole (31).

4. The bottle blowing machine as claimed in claim 1, wherein the rotation member (17) has a plurality of guiding surfaces (170) thereon and a plurality of projections (180) are formed on the multiple swinging members (18), the plurality of projections slidably and correspondingly contacting with the plurality of guiding surfaces (170), and the distance between the contact position of each projection (180) with the corresponding guiding surface (170) and the second axis changing with the rotation of the rotation member (7).

5. The bottle blowing machine as claimed in claim 1, wherein an elastic member is arranged between each swing member (18) and the machine frame (100) for providing a restoring force for the swing member (18), a convex column being formed on a corresponding locking part (190) and a U-shaped portion (181) being provided on the swing member (18) at a distance from the first axis, and the convex column being slidably inserted into the U-shaped portion (181).

6. The bottle blowing machine as claimed in any of claims 1-5, wherein the machine frame (100) comprises a support frame (14), an upper frame (15) located above the support frame (14) and an upright frame (16) fixedly connected between the support frame (14) and the upper frame (15), the mould opening and closing assembly and bottom mould locking assembly being located above the support frame (14), and the protrusion (9) being located below the support frame (14).

7. The bottle blowing machine as claimed in claim 6, wherein a first through-hole for the elevating rod (10) extending through therein and a second through-hole for the rotation shaft (12) extending through therein respectively are opened on the support frame (14), the elevating rod (10) being slidable in the first through-hole in the up-down direction, and the rotation shaft (12) being rotatable in the second through-hole.

8. The bottle blowing machine as clamed in claim 6, wherein an upper end of the rotation shaft (12) is rotatably connected with the upper frame (15).

9. The bottle blowing machine as clamed in claim 6, wherein the first axis and second axis are parallel to each other, the rotation member (17), the swing members (18) and the locking parts (190) being located above an upper surface of the support frame (14).

10. The bottle blowing machine as clamed in claim 1, wherein a swing arm (13) is connected on a lower end of the rotation shaft (12), and the power source driving the rotation of the rotation shaft (12) by the swing arm (13).

11. The bottle blowing machine as clamed in claim 1, wherein the bottle blowing machine comprises two locking parts (190) respectively at two opposite sides of the bottom mould (1) and two swing members (180) respectively corresponding to the two swing members (18), the bottom mould locking assembly also comprising two guiding rails (22) disposed on the machine frame (100), the two locking parts (190) respectively being slidable along the two guiding rails (22).

12. The bottle blowing machine as clamed in claim 10, wherein the swing arm (13) is fixedly connected with the lower end of the rotation shaft (12).

13. The bottle blowing machine as clamed in claim 1, wherein the axis of rotation of the rotation shaft (12) is parallel to the direction of movement of the elevating rod (10) relative to the machine frame (10), and the guiding groove (90) inclinedly extending relative to a plane perpendicular to the axis of rotation.

14. The bottle blowing machine as clamed in claim 13, wherein the protrusion (9) has an arc-shaped side on which the guiding groove (90) is opened, the central axis of the circumference where the arc-shaped side is and the axis of rotation of the rotation shaft (12) coincide.

15. The bottle blowing machine as clamed in claim 1, wherein the moving mould plate (3) is substantially provided along a vertical direction and the extending direction of height of the moving mould plate (3) is parallel to the shaft axis of the rotation shaft (12).

## Patentansprüche

1. Flaschenblasmaschine, umfassend:
einen Maschinenrahmen (100),
eine Formöffnungs- und -schließanordnung, die einen Formöffnungszustand und einen Formschließzustand aufweist und eine feste Formplatte, die fest an dem Maschinenrahmen (100) angeordnet ist, ein Unterwerkzeug (1), das in einer vertikalen Richtung relativ zu der festen Formplatte verschiebbar ist, und eine bewegliche Formplatte (3) umfasst, die über eine Drehwelle (12) drehbar mit der festen Formplatte (2) verbunden ist, wobei, wenn sich die Formöffnungs- und -schließanordnung in dem Formschließzustand befindet, die feste Formplatte (2), die bewegliche Formplatte (3) und das Unterwerkzeug (1) zusammen eine Einfassung bilden, um einen Hohlraum bereitzustellen,
eine Hubanordnung, **dadurch gekennzeichnet, dass** die Hubanordnung einen Vorsprung (9), der fest an der Drehwelle (12) angeordnet ist, eine Hubstange (10), die fest mit dem Unterwerkzeug (1) verbunden ist, und ein Gleitstück (11), das an der Hubstange (10) befestigt ist, umfasst, wobei eine Führungsnut (90) an dem Vorsprung (9) geöffnet ist und das Gleitstück (11) verschiebbar in der Führungsnut (90) eingesetzt ist, sich im Laufe der Drehung der Drehwelle (12) die Kontaktstelle der Führungsnut (90) mit dem Gleitstück (11) nach oben oder unten bewegt und sich das Gleitstück (11) in der von oben nach unten verlaufenden Richtung unter der Führung der Führungsnut (90) bewegt,
eine Unterwerkzeugfestklemmanordnung zum Festklemmen des Unterwerkzeugs (1) an dem Maschinenrahmen (100), die eine Vielzahl von Festklemmteilen (190), die verschiebbar an dem Maschinenrahmen (100) in einer horizontalen Richtung angeordnet sind, mehrere Schwenkelemente (18), die um eine erste Achse verschwenkbar mit dem Maschinenrahmen (100) verbunden sind, um das Verschieben der Vielzahl von Festklemmteilen (190) anzutreiben, und ein Drehelement (17), das fest mit der Drehwelle (12) verbunden und relativ zu dem Maschinenrahmen (100) um eine zweite Achse drehbar ist, um das Verschwenken der Schwenkelemente (18) relativ zu dem Maschinenrahmen (100) zu steuern, umfasst, wobei, wenn sich die Formöffnungs- und -schließanordnung in dem Formschließzustand befindet, die Vielzahl von Festklemmteilen (190) jeweils das Unterwerkzeug (1) auf eine solche Weise berühren, dass das Unterwerkzeug (1) von dem Maschinenrahmen (100) getrennt ist, und
eine Stromquelle, um die Drehung der Drehwelle (12) anzutreiben.

2. Flaschenblasmaschine nach Anspruch 1, wobei sich die Drehwelle (12) nacheinander durch die bewegliche Formplatte (3), das Drehelement (17) und den Vorsprung (9) von oben nach unten erstreckt.

3. Flaschenblasmaschine nach Anspruch 1, wobei die Formöffnungs- und -schließanordnung außerdem eine Festklemmvorrichtung zum Festklemmen der beweglichen Formplatte (3) an der festen Formplatte (2) in dem Formschließzustand umfasst, wobei die Festklemmvorrichtung eine Verbindungswelle (5), die verschiebbar an der festen Formplatte (2) angeordnet ist, eine Verbindungsstange (7), die fest mit der Verbindungswelle (5) verbunden ist, und einen Festklemmstift (6), der fest mit der Verbindungsstange (7) verbunden ist, wenigstens einen ersten Verbindungsvorsprung (30), der an der beweglichen Formplatte (3) vorgesehen ist, und ein Stiftloch (31), das an dem Verbindungsvorsprung (30) geöffnet ist, einen zweiten Verbindungsvorsprung (20), der versetzt zu dem ersten Verbindungsvorsprung (30) in der von oben nach unten verlaufenden Richtung an der festen Formplatte (2) vorgesehen ist, und ein Loch (22), das an dem zweiten Verbindungsvorsprung (20) geöffnet ist, damit sich die Verbindungsstange (7) und der Festklemmstift (6) darin verschieben, umfasst, wobei der Festklemmstift (6) in dem Formöffnungszustand in dem Loch (22) positioniert ist und sich der Festklemmstift (6) in dem Formschließzustand relativ zu dem zweiten Verbindungsvorsprung (20) verschiebt und sich durch das Loch (22) erstreckt, um in das Stiftloch (31) eingesetzt zu werden.

4. Flaschenblasmaschine nach Anspruch 1, wobei das Drehelement (17) eine Vielzahl von Führungsflächen (170) an demselben aufweist und eine Vielzahl von Vorsprüngen (180) an den mehreren Schwenkelementen (18) ausgebildet sind, wobei die Vielzahl von Vorsprüngen verschiebbar und entsprechend die Vielzahl von Führungsflächen (170) berühren und sich der Abstand zwischen der Kontaktstelle jedes Vorsprungs (180) mit der entsprechenden Führungsfläche (170) und der zweiten Achse mit der Drehung des Drehelements (7) ändert.

5. Flaschenblasmaschine nach Anspruch 1, wobei ein elastisches Element zwischen jedem Schwenkelement (18) und dem Maschinenrahmen (100) angeordnet ist, um eine Rückstellkraft für das Schwenkelement (18) bereitzustellen, wobei eine konvexe Säule an einem entsprechenden Festklemmteil (190) ausgebildet ist und ein U-förmiger Abschnitt (181) an dem Schwenkelement (18) in einem Abstand von der ersten Achse vorgesehen ist und die konvexe Säule verschiebbar in dem U-förmigen Abschnitt (181) eingesetzt ist.

6. Flaschenblasmaschine nach einem der Ansprüche 1 bis 5, wobei der Maschinenrahmen (100) einen Halterahmen (14), einen oberen Rahmen (15), der sich über dem Halterahmen (14) befindet, und einen aufrechten Rahmen (16), der fest zwischen dem Halterahmen (14) und dem oberen Rahmen (15) verbunden ist, umfasst, wobei sich die Formöffnungs- und - schließanordnung und die Unterwerkzeugfestklemmanordnung über dem Halterahmen (14) befinden und sich der Vorsprung (9) unter dem Halterahmen (14) befindet.

7. Flaschenblasmaschine nach Anspruch 6, wobei eine Durchgangsbohrung für die Hubstange (10), die sich in derselben durch dieselbe erstreckt, und eine zweite Durchgangsbohrung für die Drehwelle (12), die sich in derselben durch dieselbe erstreckt, jeweils an dem Halterahmen (14) geöffnet sind, wobei die Hubstange (10) in der ersten Durchgangsbohrung in der von oben nach unten verlaufenden Richtung verschiebbar ist und die Drehwelle (12) in der zweiten Durchgangsbohrung drehbar ist.

8. Flaschenblasmaschine nach Anspruch 6, wobei ein oberes Ende der Drehwelle (12) drehbar mit dem oberen Rahmen (15) verbunden ist.

9. Flaschenblasmaschine nach Anspruch 6, wobei die erste Achse und die zweite Achse parallel zueinander verlaufen, wobei sich das Drehelement (17), die Schwenkelemente (18) und die Festklemmteile (190) über einer oberen Fläche des Halterahmens (14) befinden.

10. Flaschenblasmaschine nach Anspruch 1, wobei ein Schwenkarm (13) mit einem unteren Ende der Drehwelle (12) verbunden ist und die Stromquelle die Drehung der Drehwelle (12) durch den Schwenkarm (13) antreibt.

11. Flaschenblasmaschine nach Anspruch 1, wobei die Flaschenblasmaschine jeweils zwei Festklemmteile (190) auf zwei gegenüberliegenden Seiten des Unterwerkzeugs (1) und zwei jeweils den zwei Schwenkelementen (18) entsprechende Schwenkelemente (180) umfasst, wobei die Unterwerkzeugfestklemmanordnung außerdem zwei Führungsschienen (22) umfasst, die an dem Maschinenrahmen (100) angeordnet sind, wobei die zwei Festklemmteile (190) jeweils entlang den zwei Führungsschienen (22) verschiebbar sind.

12. Flaschenblasmaschine nach Anspruch 10, wobei der Schwenkarm (13) fest mit dem unteren Ende der Drehwelle (12) verbunden ist.

13. Flaschenblasmaschine nach Anspruch 1, wobei die Drehachse der Drehwelle (12) parallel zu der Bewegungsrichtung der Hubstange (10) relativ zu dem Maschinenrahmen (10) verläuft und sich die Führungsnut (90) relativ zu einer rechtwinklig zu der Drehachse verlaufenden Ebene geneigt erstreckt.

14. Flaschenblasmaschine nach Anspruch 13, wobei der Vorsprung (9) eine bogenförmige Seite aufweist, auf der die Führungsnut (90) geöffnet ist, wobei die Mittelachse des Umfangs, an dem sich die bogenförmige Seite befindet, und die Drehachse der Drehwelle (12) zusammenfallen.

15. Flaschenblasmaschine nach Anspruch 1, wobei die bewegliche Formplatte (3) im Wesentlichen entlang einer vertikalen Richtung vorgesehen ist und die sich erstreckende Höhenrichtung der beweglichen Formplatte (3) parallel zu der Wellenachse der Drehwelle (12) verläuft.

## Revendications

1. Machine de soufflage de bouteilles, comprenant
un cadre de machine (100) ;
un ensemble d'ouverture et de fermeture de moule ayant un état d'ouverture de moule et un état de fermeture de moule, lequel ensemble comprend une plaque de moule fixe disposée fixement sur le cadre de machine (100), un moule inférieur (1) coulissant dans une direction verticale par rapport à la plaque de moule fixe, et une plaque de moule mobile (3) reliée de manière rotative à la plaque de moule fixe (2) par un arbre rotatif (12), et lorsque l'ensemble d'ouverture et de fermeture de moule est dans l'état de fermeture de moule, la plaque de moule fixe (2), la plaque de moule mobile (3) et le moule inférieur (1) se referment ensemble pour produire une cavité ; un ensemble de levage, **caractérisée en ce que** l'ensemble de levage comprend une saillie (9) disposée fixement sur l'arbre rotatif (12), une tige de levage (10) reliée fixement au moule inférieur (1), et un bloc coulissant (11) fixé sur la tige de levage (10), une rainure de guidage (90) étant ouverte sur la saillie (9), et le bloc coulissant (11) étant inséré de manière coulissante à l'intérieur de la rainure de guidage (90), au cours de la rotation de l'arbre rotatif (12), la position de contact de la rainure de guidage (90) avec le bloc coulissant (11) monte ou descend, et le bloc coulissant (11) se déplace dans la direction de haut en bas tout en étant guidé par la rainure de guidage (90) ;
un ensemble de verrouillage de moule inférieur servant à verrouiller le moule inférieur (1) avec le cadre de machine (100), comprenant une pluralité de parties de verrouillage (190) disposées de manière coulissante sur le cadre de machine (100) dans une direction horizontale, de multiples organes oscillants (18) reliés de manière oscillante au cadre de machine (100) autour d'un premier axe pour entraîner le coulissement de la pluralité de parties de verrouillage (190), et un organe rotatif (17) relié fixement à l'arbre rotatif (12) et pouvant tourner par rapport au cadre de machine (100) autour d'un deuxième axe, pour commander l'oscillation des organes oscillants (18) par rapport au cadre de machine (100), et lorsque l'ensemble d'ouverture et de fermeture de moule est dans l'état de fermeture de moule, la pluralité de parties de verrouillage (190) vient respectivement en contact contre le moule inférieur (1) de telle sorte que le moule inférieur (1) soit séparé du cadre de machine (100) ; et
une source de puissance servant à entraîner en rotation l'arbre rotatif (12).

2. Machine de soufflage de bouteilles selon la revendication 1, dans laquelle l'arbre rotatif (12) s'étend séquentiellement à travers la plaque de moule mobile (3), l'organe rotatif (17) et la saillie (9) de haut en bas.

3. Machine de soufflage de bouteilles selon la revendication 1, dans laquelle l'ensemble d'ouverture et de fermeture de moule comprend également un mécanisme de verrouillage servant à verrouiller la plaque de moule mobile (3) avec la plaque de moule fixe (2) dans l'état de fermeture de moule, le mécanisme de verrouillage comprenant un arbre de liaison (5) disposé de manière coulissante sur la plaque de moule fixe (2), une tige de liaison (7) reliée fixement à l'arbre de liaison (5) et une goupille de verrouillage (6) reliée fixement à la tige de liaison (7), au moins une première saillie de liaison (30) étant prévue sur la plaque de moule mobile (3), et un trou pour goupille (31) étant ouvert sur la saillie de liaison (30), une deuxième saillie de liaison (20) décalée par rapport à la première saillie de liaison (30) dans la direction de haut en bas étant prévue sur la plaque de moule fixe (2), et un trou (22) étant ouvert sur la deuxième saillie de liaison (20) pour la tige de liaison (7) et la goupille de verrouillage (6) coulissant dans celui-ci, et dans l'état d'ouverture de moule, la goupille de verrouillage (6) est positionnée dans le trou (22), et dans l'état de fermeture de moule, la goupille de verrouillage (6) coulisse par rapport à la deuxième saillie de liaison (20) et s'étend à travers le trou (22) pour s'insérer à l'intérieur du trou pour goupille (31).

4. Machine de soufflage de bouteilles selon la revendication 1, dans laquelle l'organe rotatif (17) a une pluralité de surfaces de guidage (170) sur celui-ci et une pluralité de saillies (180) sont formées sur les multiples organes oscillants (18), la pluralité de saillies venant en contact de manière coulissante et de manière correspondante avec la pluralité de surfaces de guidage (170), et la distance entre la position de contact de chaque saillie (180) avec la surface de guidage (170) correspondante et le deuxième axe changeant avec la rotation de l'organe rotatif (7).

5. Machine de soufflage de bouteilles selon la revendication 1, dans laquelle un organe élastique est agencé entre chaque organe oscillant (18) et le cadre de machine (100) pour produire une force de rappel pour l'organe oscillant (18), une colonne convexe étant formée sur une partie de verrouillage (190) correspondante et une partie en forme de U (181) étant prévue sur l'organe oscillant (18) à une distance du premier axe, et la colonne convexe étant insérée de manière coulissante à l'intérieur de la partie en forme de U (181).

6. Machine de soufflage de bouteilles selon l'une quelconque des revendications 1 à 5, dans laquelle le cadre de machine (100) comprend un cadre de support (14), un cadre supérieur (15) situé au-dessus du cadre de support (14) et un cadre dressé (16) relié fixement entre le cadre de support (14) et le cadre supérieur (15), l'ensemble d'ouverture et de fermeture de moule et l'ensemble de verrouillage de moule inférieur étant situés au-dessus du cadre de support (14), et la saillie (9) étant située en dessous du cadre de support (14).

7. Machine de soufflage de bouteilles selon la revendication 6, dans laquelle un premier trou traversant pour la tige de levage (10) s'étendant à travers celui-ci et un deuxième trou traversant pour l'arbre rotatif (12) s'étendant à travers celui-ci sont respectivement ouverts sur le cadre de support (14), la tige de levage (10) pouvant coulisser dans le premier trou traversant dans la direction de haut en bas, et l'arbre rotatif (12) pouvant tourner dans le deuxième trou traversant.

8. Machine de soufflage de bouteilles selon la revendication 6, dans laquelle une extrémité supérieure de l'arbre rotatif (12) est reliée de manière rotative au cadre supérieur (15).

9. Machine de soufflage de bouteilles selon la revendication 6, dans laquelle le premier axe et le deuxième axe sont parallèles l'un à l'autre, l'organe rotatif (17), les organes oscillants (18) et les parties de verrouillage (190) étant situés au-dessus d'une surface supérieure du cadre de support (14).

10. Machine de soufflage de bouteilles selon la revendication 1, dans laquelle un bras oscillant (13) est relié sur une extrémité inférieure de l'arbre rotatif (12), et la source de puissance entraînant en rotation l'arbre rotatif (12) par le biais du bras oscillant (13).

11. Machine de soufflage de bouteilles selon la revendication 1, dans laquelle la machine de soufflage de bouteilles comprend deux parties de verrouillage (190) respectivement au niveau de deux côtés opposés du moule inférieur (1) et deux organes oscillants (180) correspondant respectivement aux deux organes oscillants (18), l'ensemble de verrouillage de moule inférieur comprenant également deux rails de guidage (22) disposés sur le cadre de machine (100), les deux parties de verrouillage (190) pouvant coulisser respectivement le long des deux rails de guidage (22).

12. Machine de soufflage de bouteilles selon la revendication 10, dans laquelle le bras oscillant (13) est relié fixement à l'extrémité inférieure de l'arbre rotatif (12).

13. Machine de soufflage de bouteilles selon la revendication 1, dans laquelle l'axe de rotation de l'arbre rotatif (12) est parallèle à la direction du mouvement de la tige de levage (10) par rapport au cadre de machine (10), et la rainure de guidage (90) s'étendant de manière inclinée par rapport à un plan perpendiculaire à l'axe de rotation.

14. Machine de soufflage de bouteilles selon la revendication 13, dans laquelle la saillie (9) a un côté arqué sur lequel la rainure de guidage (90) est ouverte, l'axe central de la circonférence où le côté arqué se trouve et l'axe de rotation de l'arbre rotatif (12) coïncidant.

15. Machine de soufflage de bouteilles selon la revendication 1, dans laquelle la plaque de moule mobile (3) est prévue sensiblement le long d'une direction verticale et la direction d'étendue en hauteur de la plaque de moule mobile (3) est parallèle à l'axe d'arbre de l'arbre rotatif (12).
